Europäisches Patentamt

**(19)** European Patent Office

Office européen des brevets

(11) Publication number : **0 057 994 B2**

# (12) NEW EUROPEAN PATENT SPECIFICATION

(45) Date of publication of the new patent specification : **16.09.92 Bulletin 92/38**

(21) Application number : **82300275.3**

(22) Date of filing : **19.01.82**

(51) Int. Cl.$^5$ : **B32B 15/08, H01B 11/10**

(54) **Plastic/metal laminates, cable shielding or armoring tapes, and electrical cables made therewith.**

(30) Priority : **19.01.81 US 225946**

(43) Date of publication of application :
**18.08.82 Bulletin 82/33**

(45) Publication of the grant of the patent :
**13.11.85 Bulletin 85/46**

(45) Mention of the opposition decision :
**16.09.92 Bulletin 92/38**

(84) Designated Contracting States :
**AT BE CH DE FR IT LI NL SE**

(56) References cited :
EP-A- 0 019 835
DE-A- 1 490 699
FR-A- 2 181 968
FR-A- 2 347 754
GB-A- 1 295 377
GB-A- 1 576 513
NL-A- 7 710 654
US-A- 3 233 036

(56) References cited :
US-A- 3 586 756
US-A- 3 823 747
US-A- 3 891 791
US-A- 3 908 070
US-A- 3 950 605
US-A- 4 049 904
US-A- 4 092 452
US-A- 4 125 739
US-A- 4 132 857
Derwent Abstracts 65516 Y/37
J.H. Briston, Plastics Films, London (1974), p. 235

(73) Proprietor : **THE DOW CHEMICAL COMPANY**
**2030 Dow Center Abbott Road P.O. Box 1967**
**Midland Michigan 48640-1967 (US)**

(72) Inventor : **Brezinsky, Richard Harry**
**3018 Knollwood**
**Newark Ohio 43055 (US)**

(74) Representative : **Allard, Susan Joyce et al**
**BOULT, WADE & TENNANT, 27 Furnival Street**
**London EC4A 1PQ (GB)**

EP 0 057 994 B2

## Description

This invention relates (I) to plastic/metal laminates comprising at least one metallic substrate having at least one layer of a thermoplastic polymer directly adhered to at least one surface thereof, in which at least one polymer layer in direct contact with the metallic substrate comprises (a) a-random copolymer of ethylene and an ethylenically unsaturated carboxylic acid and bears on its surface opposite said metallic substrate a layer (b) of a blend of either the same or a different ethylene/ ethylenically unsaturated carboxylic acid copolymer and a least one different ethylene polymer resin and (II) to cable shielding and/or armoring tapes and electrical communications cables prepared from such laminates.

In the manufacture and use of various laminated or composite articles involving one or more metallic layers or substrates having one or more layers or coatings of a thermoplastic polymer material adhered thereto, an oftentimes controlling factor or consideration governing their suitability for various end-use applications is the degree of adhesion as between the various polymeric and metallic layers in such laminated or composite article. A particular example of an area in which the adhesion between the various layers in a plastic/metal composite article is of great concern can be found in U.S. Patent 4,132,857 wherein the need for improved adhesion as between the polyethylene insulation jacketing material and the metal sheath in electrical cable constructions is discussed. More specifically, such patent proposes to improve the adhesion between said polyethylene jacketing material and said metal sheath by using, in place of the more conventionally employed ethylene/acrylic or methacrylic acid copolymer adhesive layer, a coextruded dual film laminate comprising (1) a first film layer of an ethylene/acrylic or methacrylic acid copolymer or known-ionomer salts thereof and (2) a second film layer of either polyethylene, an ethylene/acrylyl ester copolymer or an ethylene/vinyl acetate copolymer.

While it appears that the above-discussed approach of U.S. Patent 4,132,857 may be capable of providing some measure of improved jacketing resin adhesion in certain instances when measured at room temperature, such an improvement in room temperature adhesion performance does not appear to be consistently achieved across the full range of possible jacketing resin/second-film layer combinations. (See, for example, the data summarized in the hereinafter presented working examples.) Moreover, it has also been found that even when good room temperature jacketing resin adhesion is obtained (e.g., either by the above discussed dual film layer approach of U.S. Patent 4,132,857 or via a monolayer ethylene/acrylic or methyacrylic acid copolymer-coated metal shielding tape approach), such adhesion value can oftentimes be dramatically less when measured at high and/or low adhesion testing temperatures.

Thus, in view of the fact that various plastic/metal composite articles or laminates can reasonably be expected to be installed and/or otherwise used (e.g., as electrical communications cables; as metal/plastic/metal laminates for potential use as electrical appliance housings, in heating ducts, in various automotive applications, etc.) at temperatures substantially above or below normal room temperature (e.g., 23°C), it would be highly desirable to provide a means of improving the high and/or low temperature adhesion as between metal substrates and olefin polymer outer coating or inner core layers in such plastic/metal composite articles or laminates.

Accordingly, the present invention provides a plastic/metal laminate which is adhered to an olefin polymer and which comprises at least one metallic substrate having directly adhered to at least one surface thereof a multi-layer plastic coating comprising a first thermoplastic polymer layer of a random copolymer of ethylene with an ethylenically unsaturated carboxylic acid monomer, the first layer being directly adhered to the metallic substrate, and characterized by a second thermoplastic polymer layer of either (A) a polymer blend of 60% by weight of the blend of a low density polyethylene and 40% by weight of the blend of a random copolymer of a major proportion of ethylene with a minor proportion of an ethylenically unsaturated acid which ie acrylic acid, or (B) a polymer blend of from 70 to 90% by weight of the blend of a copolymer of ethylene and vinyl acetate with from 10 to 30% by weight of the blend of a random copolymer of a major proportion of ethylene with a minor proportion of an ethylenically unsaturated acid which is acrylic acid, which is directly adhered to the first polymer layer on the surface thereof opposite the metallic substrate; the blend layer being further characterized by forming the intermediate adhesive layer between the first polymer layer and the olefin polymer layer which is an ethylene homopolymer or a copolymer of a major proportion of ethylene with a minor proportion of a comonomer which is polymerizable therewith, the said blend layer providing higher 90° peel adhesion as between the first polymer layer and the olefin polymer layer when measured at -12°C and 71°C (10°F and 160°F) than is obtained by directly adhering the first polymer and the olefin polymer layer to each other.

Thus, in one aspect, the present invention takes the form of a plastic/metal laminate (e.g., a plastic/metal laminate, a plastic/metal/plastic laminate, or a metal/plastic/metal laminate, such as are used as cable shielding and/or armoring tapes, etc.) adhered to an olefin polymer layer.

Further, in another aspect, the present invention takes the form of a more finished plastic/metal composite article such as, for example, an electrical cable, a formable and/or structural metal/plastic/metal laminate, etc., which comprises at least one olefin polymer layer (e.g., such as a central core layer in said metal/plastic/metal laminate or as an outer insulating jacketing resin layer in said electrical cable) which is directly adhered to a layer of the aforementioned polymer blend. Thus, in one of these latter instances, an electrical cable is provided having improved high and low temperature structural integrity which comprises (1) a core including at least one insulated conductor; (2) a shield or armor tape surrounding said core, said shield or armor tape being composed of the above defined plastic/metal laminate; and (3) an outer olefin jacketing resin surrounding the cable shielding tape and being directly adhered to the polymer blend layer of the laminate.

Similarly, in another of these latter instances, a metal/plastic/metal laminate is provided which also has improved high and/or low temperature structural integrity, the laminate comprising two metallic sheets or substrates sandwiching an inner olefin polymer core layer and having interposed between each of the two major surfaces of the core layer and the adjacent metallic substrates a layer of the hereinbefore described multiple layered thermoplastic adhesive with the polymer blend layers being directly adhered to the olefin polymer core layer and with the random copolymer layers being directly adhered to their corresponding adjacent metallic substrate.

As used herein, "low temperature structural integrity or adhesion" is evaluated by measuring the 90° peel strength of the laminate or concern at a testing temperature of -12°C Similarly, "high temperature structural integrity or adhesion" is determined by measuring the 90° peel strength at a testing temperature of 71°c.

Further, it should be understood that when "random copolymers of ethylene with an ethylenically unsaturated carboxylic acid" are referred to it is intended to include therewith the known partially or fully neutralized versions thereof which are commonly referred to in the art as "ionomers".

In addition, it should also be understood that, when improved high and low temperature adhesion or structural integrity is referred to herein, it is meant that the high and low temperature adhesion between the olefin polymer core or surface layer or layers and the metal substrate or substrates of the metal/olefin polymer laminate or composite article involved is improved by virtue of the use of the above-described multilayered adhesive system (a) relative to corresponding adhesion provided by the use of a single layer of a random ethylene/carboxylic acid copolymer as the adhesive therein and (b) relative to the use of a two layered adhesive system (e.g., a coextruded two layer film) having a random ethylene/carboxylic acid metal substrate-contacting layer and a different olefin polymer layer contacting the olefin polymer substrate of the laminate or composite involved.

Plastic/metal laminates or composite articles to which the present invention is applicable include any such laminate or article in which it is desired to adhere one or more metal sheets or substrates to one or more layers or substrates of an olefin polymer not typically exhibiting very good adhesion to such a metallic sheet or substrate. Thus, the present invention is applicable where it is desired to adhere such an olefin polymer as an outer coating layer on one or both sides of a single metal sheet or substrate such as, for example, in the case of a cable shielding and/or armoring tape per se or in the case of an olefin polymer jacketed electrical communications cable utilizing one or more metallic shields or armors formed from such a cable shielding tape as well as in the case of other olefin polymer coated metal materials, such as are used, for example, in flexible packaging applications, coated structural or building panel applications and the like. Similarily, the present invention is also applicable where it is desired to adhere two or more metal sheet or substrates to a common olefin polymer sheet, substrate or core layer such as, for example, in the case of structural or formable metal/plastic/metal composite articles or laminates having a central core layer of the aforementioned type of olefin polymer adhesively bonded to, and sandwiched between, two outer metallic sheets or skins.

The metallic substrate (e.g., sheets, strips, etc.) employed in the practice of the present invention will typically have a thickness of from 0.005 to 0.64 mm (0.2 to 25 mils) (more preferably from 0.05 to 0.38 mm (2 to 15 mils)) and can be composed of a wide variety of materials such as, for example, aliminum, aluminum alloys, alloy-clad aluminum, copper, surface modified copper, bronze, steel, tin free steel, tin plate steel, aluminized steel, aluminumclad steel, stainless steel, copper-clad stainless steel, copper-clad low carbon steel, terne-plate steel, galvanized steel, chrome plated or chrome treated steel, lead, magnesium, tin and the like. Such metals can, of course, be surface treated or have conversion coating on the surface thereof if desired.

Particularly preferred metallic substrates for use herein include those composed of chrome/chrome oxide coated steel (also commonly referred to in the art as tin-free steel), stainless steel, aluminum and copper.

Thermoplastic polymers suitable for use as the metal-contacting layer in the practice of the present invention include the known normally solid random copolymers of a major proportion of ethylene with a minor proportion (e.g., typically from 1 to 30, preferably from 2 to 20, percent by weight based upon the weight of such copolymer) of an ethylenically unsaturated carboxylic acid monomer. Specific examples of such suitable ethylenically unsaturated carboxylic acids (which term includes mono- and polybasic acids, acid anhydrides, and partial esters of polybasic acids, as well as the various metallic salts thereof) are acrylic acid, methacrylic acid, crotonic acid, fumaric acid, maleic acid, itaconic acid, maleic anhydride, monomethyl maleate, monoethyl maleate, monomethyl fumarate, monoethyl fumarate, tripropylene glycol monomethyl ether acid maleate, or ethylene glycol monophenyl ether acid maleate. The carboxylic acid monomer is preferably selected from $\alpha,\beta$-ethylenically unsaturated mono- and polycarboxylic acids and acid anhydrides having from 3 to 8 carbon atoms per molecule and partial esters of such polycarboxylic acid wherein the acid moiety has at least one carboxylic acid group and the alcohol moiety has from 1 to 20 carbon atoms. Such copolymers may consist essentially of ethylene and one or more of such ethylenically unsaturated acid or anhydride comonomers or can also contain small amounts of other monomers copolymerizable with ethylene. Thus, the copolymer can contain other copolymerizable monomers including esters of acrylic acid, methyacrylic acid and the like. Random copolymers of such type and methods of making them are readily known in the art.

Especially preferred ethylene/ethylenically unsaturated carboxylic acid copolymers for use as the metal substrate contacting layer in the present invention are the normally solid random copolymers of ethylene with from 2 to 15 weight percent of acrylic, methacrylic or crotonic acid (especially acrylic acid) such as those described in U.S. Patents 3,520,861 and 3,239,370 and the known ionomer salts thereof.

The thickness of the aforementioned ethylene/-carboxylic acid copolymer metal-contacting layer employed in the practice of the present invention is not particularly critical. However, as a general rule, each such layer will have a thickness of from 0.0025 to 0.254 mm (0.1 to 10 mils) and preferably atom 0.007 to 0.064 mm (0.3 to 2.5 mils).

As has been noted, the second required thermoplastic polymer layer employed in the present invention is either (A) a polymer blend of 60% by weight of the blend of a low density polyethylene and 40% by weight of the blend of a random copolymer of a major proportion of ethylene with a minor proportion of an ethylenically unsaturated acid which is acrylic acid or (B) a polymer blend of 70 to 90% by weight of the blend of a copolymer of ethylene and vinyl acetate with from 10 to 30% by weight of the blend of a random copolymer of a major proportion of ethylene with a minor proportion of an ethylenically unsaturated acid which is acrylic acid.

The ethylene/acrylic acid copolymer component of the blend layer may be the same as or different from the ethylene/carboxylic acid component employed in the metal-contacting layer. As a rule, however, it is generally preferable that the ethylene/acrylic acid component of said blend layer has a somewhat smaller portion of the ethylenically unsaturated carboxylic acid copolymerized therein than is the case for the ethylene/acrylic acid copolymer employed in said metal-contacting layer. Thus, for example, when an ethylene/acrylic acid copolymer having an acrylic acid content of 6 percent by weight is employed in the metal contacting layer, it is generally preferred to use an ethylene/carboxylic acid copolymer in the blend layer having a smaller amount of carboxylic acid monomer copolyerized therein such as, for example, an ethylene/acrylic acid copolymer having an acrylic acid content of about 3 percent by weight.

The thickness of the indicated polymer blend layer is not particularly critical to the invention. However, as a general rule, such layer will typically have a thickness of from 0.0025 to 0.254 mm (0.1 to 10 mils) and will preferably have a thickness of from 0.0076 to 0.064 mm (0.3 to 2.5 mils).

In the practice of the present invention, the above-described multiple layered adhesive film system can be applied to a metallic substrate in any convenient fashion. Thus, for example, conventional extrusion coating techniques may be employed to apply said adhesive layers to a select metallic substrate and, in such event, application can be accomplished either (and more preferably) as a single extrusion coating operation using know coextrusion equipment and techniques or as a multiple step operation in which the various polymer layers to be employed are each individually applied in separate extrusion coating operations. Alternatively, conventional film lamination techniques can also be suitably employed to adhere the noted multiple layered adhesive film system to the desired metallic substrate and, in such event, multiple lamination steps applying the desired individual layers as separate monolayer films can be employed or, more preferably, as a single lamination operation using a previously coextruded film of the desired multilayered adhesive system.

Naturally, a combination of conventional coextrusion and film lamination technologies can be employed to provide the ultimately desired composite articles in a given instance. Thus, for example, when a metal/plastic/metal laminate is to be prepared, it may be desirable to first coextrude a composite film having a structure such as multiple layer adhesive/olefin polymer core/multiple layer adhesive and to thereafter film laminate such composite film to two outer skin layers of the desired metallic sheet material.

Olefin polymer materials to which the polymer blend layer(s) of the above-described multiple layered adhesive film system is ultimately to be adhered in the desired composite article or structure (e.g., as olefin polymer jacketing resins in electrical cable structures, as olefin polymer core layers in metal/plastic/metal laminates, and the like) include those hereinbefore described for use as the ethylene polymer resin component in the polymer blend layer of the subject multiple layered adhesive film system. Preferred olefin polymers for such polymer core, jacketing resin, etc. usage typically include the various ethylene homopolymers and copolymers of a major proportion of ethylene with a minor proportion of higher (e.g., $C_3$-$C_{12}$) $\alpha$-olefin monomers

and vinyl ester monomers such as vinyl acetate and lower alkanol esters of acrylic or methacrylic acid, with the ethylene homopolymers (i.e., low, medium or high density polyethylene) and the ethylene/higher α-olefin copolymers being particularly preferred in certain end-use applications.

As has been previously alluded to, the present invention makes possible the preparation of various metal/plastic composite articles or laminates, which are of generally known types (such as, for example, olefin polymer-jacketed electrical or communications cables; structural and/or formable metal/olefin polymer/-metal laminates; etc.) but which have improved structural integrity at high (71°C) and low (-12°C) temperatures relative to their known prior art counterparts. Such composite articles or laminates, when subjected to a 90° peel test in accordance with the standard test procedure ASTM-D-1876 (as herein described) should exhibit a peel strength of greater than 0.89 kg/cm preferably greater than 1.79 kg/cm and most preferably greater than 2.33 kg/cm at a low temperature of -12°C after aging, and a peel strength of greater than 1.79 kg/cm and preferably 2.33 kg/cm of example width at a high temperature of 60°C after aging. More specifically, the plastic/metal laminate of the invention such as is used, for example, for a cable jacket exhibits the above-mentioned improved 90° peel strength. Such increased peel strength is not obtained by directly adhereing the first random copolymer layer of the laminate to the olefin polymer layer.

In a particular aspect of the present invention one side of the metallic substrate bears the two layer thermoplastic polymer coating and the other side of the metallic substrate has adhered directly thereto a single layer coating of a random copolymer of ethylene with a minor proportion of an ethylenically unsaturated carboxylic acid, the multiple layer and single layer coatings each having a thickness in the range of from 0.0025 to 0.254 mm (0.1 to 10 mils).

The preparation and use of such laminates or composite articles in accordance with the present invention are generally accomplished in the conventional fashion with the beneficial exception that notably improved high and low temperature structural integrity and/or performance characteristics are obtained.

The present invention is further illustrated by, but is not to be understood as being in any way limited to, the following detailed examples thereof in which all parts and percentages are on a weight basis unless otherwise indicated.

Example 1

In this example, a 2.3 mil (58 μm) thick two layer adhesive film is laminated to one side of a 6 mil (152 μm) thick sheet of electrolytic chrome/-chrome oxide coated steel (ECCS) and the resulting laminate is then compression molded to a 75 mil (1.9 mm) thick sheet of a telephone cable jacketing resin composition composed of a high molecular weight low density polyethylene having a melt index of 0.45 and a density of 0.932 g/cc and containing 2.6 weight percent carbon black to thereby form an ECCS/2-layer adhesive film/jacketing resin laminate sample. The resulting laminate sample is then cut into 1 inch (2.54 cm) wide, 3 inch (7.62 cm) long strips and some of such strips are subjected to 90° peel testing in accordance with ASTM D-1876 (except that a two-inch (5.08 cm) per minute crosshead speed is employed, conditioning is for 12 to 48 hours in 50 percent relative humidity air at 73°F (23°C), the bonded and unbonded lengths of the polymer layer are about 3 inches (7.62 cm) each and testing is performed on at least 3 test specimens (instead of ten) at various temperatures in order to determine the initial adhesion values thereof at such testing temperatures. The remaining 1 inch (2.54 cm) wide sample specimens are immersed (i.e., "aged") in water at 140°F (60°C) for one week, allowed to equilibrate and dry in 50 percent relative humidity, 73°F (23°C) air overnight and then are also subjected to 90° peel testing as described above at various temperatures in order to determine the adhesion value for such aged specimens at the indicated testing temperatures. For testing at other than room temperature, the test specimen is placed in the bottom of an environmental chamber for a minimum of 30 minutes at the test temperature to be employed. The test specimen is then placed in the holding fixture and, after re-equilibration for 2 minutes, the peel adhesion is determined.

The two-layer adhesive film employed in the preparation of the aforementioned laminate samples is a 1:1 layer thickness ratio film in which one layer is composed of a random ethylene/acrylic acid (EAA) copolymer (6 weight percent acrylic acid based upon the copolymer weight and melt index = 5.5) and in which the other layer is composed of polymer blend of (1) 60 weight percent (based on blend weight) of a conventional low density polyethylene resin having a melt index of 2 and a density of 0.921 g/cc and (2) 40 weight percent (based on the polymer blend weight) of a random ethylene/acrylic acid (EAA) copolymer having an acrylic acid content of 3 weight percent based upon such EAA copolymer and a melt index of 11.0. In the preparation of such samples, the indicated two-layer film is laminated by preheating the metal for one minute in a circulating air oven heated to 300°F (149°C) and by then pulling the preheated metal sheet and the indicated two-layer film (the EAA non-blend layer being in direct contact with the metal surface) through a set of rubber nip rolls. The resulting laminate is then post heated for 1 minute in a circulating air oven heated to 300°F (149°C).

In the compression molding operation to form the aforementioned ECCS/2-layer adhesive/jacketing resin laminate sample, a platen press is employed, the above-described ECCS/2-layer adhesive film laminate is placed in contact with the indicated jacketing resin sheet in such press (the blend layer of the adhesive film being in direct contact with the jacketing resin sheet) and compression molding is accomplished at 230°C and about 15 psig (105 kg/cm$^2$) for three minutes. The resulting laminate is then cooled to room temperature in the platen press, removed from the press and subsequently cut into the aforementioned 1 inch (2.54 cm) wide specimens and tested in the manner hereinbefore indicated.

For comparison purposes, a similar laminate (i.e., Control 1) is prepared and tested in which a single 2.3 mil (58 μm) thick monolayer EAA copolymer film composed of a major proportion of ethylene and 6 weight percent acrylic acid content only is employed in place of the above-noted two-layer adhesive film system.

The adhesion testing results for each type of laminate are summarized in Table I below.

## TABLE I

| LAMINATE | ADHESION AT INDICATED TESTING TEMPERATURE[1] | | | | | | | |
| | 10°F (-12°C) | | Room Temp[2] | | 140°F (60°C) | | 160°F (71°C) | |
| | Initial | Aged | Initial | Aged | Initial | Aged | Initial | Aged |
| Example 1 | 3.7 | 3 | 3.2 | 3.1 | 2.6 | 2.5 | 1.8 | 1.8 |
| Control 1* | 0.9 | 0 | 3.2 | 3.3 | 1.3 | 1.1 | 0.6 | 0.2 |

* Not an example of the invention.

[1] 90° peel strength adhesion value in kg/cm of a sample width.

[2] Room Temperature = approximately 73°F (23°C).

From the results in Table I, it is seen that while the Control 1 laminate exhibits very good adhesion values at room temperature, such adhesion values are dramatically reduced when measured at the low (i.e., -12°C) or high (i.e., 60°C and 71°C) adhesion testing temperatures. In contrast, even though the adhesion values for the Example 1 laminate are somewhat reduced at the elevated test temperatures (i.e., relative to the room temperature test values), it is nonetheless still seen that the Example 1 laminate exhibits substantially higher adhesion values at low and high temperature than Control 1 comparative laminate.

Example 2

Example 1 is repeated except that another jacketing resin composition composed of a high molecular weight low density polyethylene having a melt index of 0.25, a density of 0.932 g/cc and containing 2.6 weight percent carbon black, is employed in place of the jacketing resin composition of Example 1.

Three additional laminates (i.e., Controls 2A, 2B and 2C) are prepared for comparative purposes using the above-described jacketing resin but using a different type of adhesive film in place of the two-layered adhesive film of Examples 1 and 2 laminate. Specifically, a 2.3 mil (58 micron) thick monolayer film of the hereinbefore-discussed 6 weight percent acrylic acid (AA) content EAA random copolymer is employed as the adhesive film layer in the Control 2A laminate. In the Control 2B laminate, the adhesive film employed is a 2.3 mil (58 micron) thick 1:1 layer thickness ratio 2-layer film in which the metal contacting layer is composed of the aforementioned 6 weight percent AA content random EAA copolymer and in which the jacketing resin contacting layer is composed of the low density polyethylene resin which was employed as one of the components of the Example 1 and 2 blend layers. In the Control 2C laminate, the adhesive film employed is a 2.3 mil (58 micron) thick 1:1 layer thickness ratio 2-layer film in which the metal contacting layer is once again composed of the aforementioned 6 weight percent AA content random EAA copolymer and in which the jacketing resin contacting layer is composed of the 3 weight percent AA content random EAA copolymer which was employed as one of the components of the Example 1 and 2 blend layers.

The adhesion value results for the Example 2 laminate and for the various comparative laminates are summarized in Table II below.

## TABLE II

| LAMINATE | ADHESION AT INDICATED TESTING TEMPERATURE[1] | | | | | | | |
| | 10°F (-12°C) | | Room Temp[2] | | 140°F (60°C) | | 160°F (71°C) | |
| | Initial | Aged | Initial | Aged | Initial | Aged | Initial | Aged |
|---|---|---|---|---|---|---|---|---|
| Example 2 | 3.8 | 3.8 | 2.9 | 2.9 | 2.3 | 2.4 | 1.6 | 1.7 |
| Control 2A* | 2.1 | 0 | 3.3 | 3.0 | 1.0 | 1.7 | 0.5 | 1.0 |
| Control 2B* | 2.1 | 1.6 | 2.8 | 3.0 | 1.6 | 1.8 | 1.1 | 1.3 |
| Control 2C* | 2.1 | 2.6 | 3.0 | 3.3 | 1.8 | 1.9 | 0.5 | 0.6 |

\* Not an example of the invention.

[1] 90° peel strength adhesion value in kg/cm of a sample width.

[2] Room Temperature = approximately 23°C.

EP 0 057 994 B2

As can be seen from the results in Table II, the Example 2 laminate exhibits notably better high and low temperature values than all three of the comparative laminate samples.

Examples 3-5

Example 2 is again repeated except that the blend layer of the two layer adhesive film of Example 2 is replaced by those indicated in Table III below.

In addition, a comparative laminate sample (i.e. Control 5) ie prepared and tested in which a non-blend layer composed solely of the non-EAA component of the Example 3-5 blend layers are employed in place of the blend layers of said examples.

The results of the adhesion evaluations for these various laminates are summarized in Table III below along with a restatement of the results for the Control 2C laminate discussed in Example 2.

## TABLE III

| LAMINATE | BLEND LAYER COMPOSITION | ADHESION AT INDICATED TESTING TEMPERATURE[1] | | | |
|---|---|---|---|---|---|
| | | 10°F (-12°C) | Room Temp[2] | 140°F (60°C) | 160°F (71°C) |
| Control 5* | No Blend; 100 wt % Resin D[3] | 2.8 | 4.2 | 2.4 | 1.2 |
| Example 3 | 90 wt % Resin D, 10 wt % Resin C[4] | 2.7 | 4.0 | 2.5 | 1.8 |
| Example 4 | 80 wt % Resin D, 20 wt % Resin C | Broke[5] | 3.8 | 2.5 | 1.8 |
| Example 5 | 70 wt % Resin D, 30 wt % Resin C | Broke[5] | 3.8 | 2.3 | 1.7 |
| Control 2C* | No Blend; 100 wt % Resin C | 2.1 | 2.8 | 1.8 | 0.5 |

\* Not an example of the invention.
[1] Initial 90° peel adhesion value in kg/cm of sample width.
[2] Room Temp 23°C.
[3] Resin D is an ethylene/vinyl acetate copolymer having a vinyl acetate content of 12 wt % and a melt index of 0.25.
[4] Resin C = EAA with 6 wt. % acrylic acid content.
[5] "Broke" designates that adhesion was so strong that the peeling tab broke prior to delamination from the metal.

EP 0 057 994 B2

As can be seen from the results in Table III. the 71°C adhesion values for the blend layer laminates of Examples 3-5 are higher than is obtained using either of the blend layer components alone. (Compare 71°C values for Examples 3-5 relative to those of Controls 5 and 2C.)

Examples 6 and 7

Example 2 is again repeated except that the blend layers of the two layer adhesive films employed are as indicated in Table IV.

In addition, the results for comparative laminate samples are also summarized in Table IV in which non-blend layers are employed in place of the blend layers of the examples, said non-blend layers being composed solely of the individual components of the blend layers of the examples.

## TABLE IV

| LAMINATE | BLEND LAYER COMPOSITION | ADHESION AT INDICATED TESTING TEMPERATURE[1] | | | |
|---|---|---|---|---|---|
| | | 10°F (-12°C) | Room Temp[2] | 140°F (60°C) | 160°F (71°C) |
| Control 7* | No Blend; 100 wt % Resin F[3] | ~0 | 3.2 | 0.9 | 0.5 |
| Example 6 | 60 wt % Resin F, 40 wt % Resin C | Broke | 2.7 | 2.3 | 1.6 |
| Control 9* | No Blend, 100 wt % Resin H[5] | ~0 | 2.7 | 0.9 | 0.2 |
| Example 7 | 60 wt % Resin H, 40 wt % Resin C | Broke | 3.0 | 2.3 | 1.6 |
| Control 2C* | No Blend, 100 wt % Resin C | 2.1 | 3.0 | 1.8 | 0.5 |

\* Not an example of the invention.
[1] Initial 90° peel adhesion value in kg/cm of sample width.
[2] Room Temp 23°C.
[3] Resin F = A conventional low density polyethylene (melt index = 1.9 and density = 0.924 g/cc).
[4] Resin C = EAA having 3 wt. % acrylic acid content.

[5] Resin H = A conventional low density polyethylene (melt index = 2.7 and density = 0.925 g/cc).

EP 0 057 994 B2

Examples 8-10

Examples 2,7 and 6 are repeated except that a low pressure process linear low density polyethylene having a melt index of 0.45 and a density of 0.932 g/cc and containing 2.6 weight percent carbon black is employed as the jacketing resin composition in place of the Example 2 jacketing resin composition.

The adhesion values for the resulting laminate samples are summarized in Table V below.

TABLE V

| LAMINATE | BLEND LAYER COMPOSITION | ADHESION AT INDICATED TESTING TEMPERATURE[1] | | | |
|---|---|---|---|---|---|
| | | 10°F (-12°C) | Room Temp[2] | 140°F (60°C) | 160°F (71°C) |
| Example 8 | 60 wt % Resin G[3], 40 wt % Resin C | 3.7 | 3.2 | 2.6 | 1.8 |
| Example 9 | 60 wt % Resin H[4], 40 wt % Resin C | 3.7 | 3.3 | 2.6 | 1.9 |
| Example 10 | 60 wt % Resin F[5], 40 wt % Resin C | 2.9 | 3.7 | 2.5 | 1.6 |

[1] Initial 90° peel adhesion value in kg/cm of sample width.
[2] Room Temp 23°C.
[3] Resin G = A conventional low density polyethylene (melt index = 2.0 and density = 0.921 g/cc).
[4] Resin H = A conventional low density polyethylenen (melt index = 2.7 and density = 0.925 g/cc).
[5] Resin F = A conventional low density polyethylene (melt index = 1.9 and density = 0.924 g/cc).

As can be seen from the results in Table V, the laminates of Examples 8-10 exhibited very good adhesion across the full range of testing temperatures.

## Claims

1. A plastic/metal laminate which is adhered to an olefin polymer and which comprises at least one metallic substrate having directly adhered to at least one surface thereof a multi-layer plastic coating comprising a first thermoplastic polymer layer of a random copolymer of ethylene with an ethylenically unsaturated carboxylic acid monomer, the first layer being directly adhered to the metallic substrate, and characterized by a second thermoplastic polymer layer of a polymer blend of 60% by weight of the blend of a low density polyethylene and 40% by weight of the blend of a random copolymer of a major proportion of ethylene with a minor proportion of an ethylenically unsaturated acid which is acrylic acid, which is directly adhered to the first polymer layer on the surface thereof opposite the metallic substrate; the blend layer being further characterized by forming the intermediate adhesive layer between the first polymer layer and the olefin polymer layer which is an ethylene homopolymer or a copolymer of a major proportion of ethylene with a minor proportion of a comonomer which is polymerizable therewith, the said blend layer providing higher 90° peel adhesion as between the first polymer layer and the olefin polymer layer when measured at -12°C and 71°C (10°F and 160°F) than is obtained by directly adhering the first polymer and the olefin polymer layer to each other.

2. A plastic/metal laminate which is adhered to an olefin polymer and which comprises at least one metallic substrate having directly adhered to at least one surface thereof a multi-layer plastic coating comprising a first thermoplastic polymer layer of a random copolymer of ethylene with an ethylenically unsaturated carboxylic acid monomer, the first layer being directly adhered to the metallic substrate, and characterized by a second thermoplastic polymer layer of a polymer blend of from 70 to 90% by weight of the blend of a copolymer of ethylene and vinyl acetate, with from 10 to 30% by weight of the blend of a random copolymer of a major proportion of ethylene with a minor proportion of an ethylenically unsaturated acid which is acrylic acid, which is directly adhered to the first polymer layer on the surface thereof opposite the metallic substrate; the blend layer being further characterized by forming the intermediate adhesive layer between the first polymer layer and the olefin polymer layer which is an ethylene homopolymer or a copolymer of a major proportion of ethylene with a minor proportion of a comonomer which is polymerizable therewith, the said blend layer providing higher 90° peel adhesion as between the first polymer layer and the olefin polymer layer when measured at -12°C and 71°C (10°F and 160°F) than is obtained by directly adhering the first polymer and the olefin polymer layer to each other.

3. A laminate as claimed in claim 1 or claim 2 wherein the metallic substrate is steel, aluminium or copper having a thickness of from 0.005 to 0.64 mm (0.2 to 25 mils).

4. A laminate as claimed in claim 1 or claim 2 wherein the random copolymer in the first and second layers contains from 1 to 30 weight percent of the ethylenically unsaturated carboxylic acid copolymerised therein.

5. A laminate as claimed in any one of the preceding claims wherein in the polymer blend of the second layer the ethylene/acrylic acid copolymer has an acrylic acid content of up to 6% by weight, preferably 3% by weight.

6. A laminate as claimed in claim 1 wherein in the polymer blend of the second layer the low density polyethylene has a melt index of at least 2.0.

7. A laminate as claimed in claim 1 or claim 2 in which one side of the metallic substrate bears the txo layer thermoplastic polymer coating and the other side of the metallic substrate has adhered directly thereto a single layer coating of a random copolymer of ethylene with a minor proportion of an ethylenically unsaturated carboxylic acid.

8. A laminate as claimed in claim 7, wherein the multiple layer and the single layer coatings each have a thickness in the range of from 0.0025 to 0.254 mm (0.1 to 10 mils).

9. A laminate as claimed in claim 7 or claim 8, wherein the peel strength between the interfacial layers of the first random copolymer layer and the olefin polymer layer is greater than 0.89 kg/cm (8.73 N/cm) of sample width at a temperature of -12°C after ageing and greater than 1.79 kg per cm (17.55 N/cm) of sample width at a temperature of 60°C after ageing.

10. A laminate as claimed in claim 9 wherein the peel strength between the first layer and the olefin polymer layer is preferably greater than 2.33 kg/cm (22.85 N/cm) of sample width at a temperature of -12°C after ageing and greater than 2.33 kg/cm (22.85 N/cm) of sample width at a temperature of 60°C after ageing.

11. An electrical cable having improved high and low temperature structural integrity comprising (1) a core including at least one insulated conductor; (2) a cable shielding or armoring tape surrounding the core and comprising a laminate as claimed in any one of claims 1 to 8, and (3) an outer olefin jacket surrounding the cable shielding or armoring tape and being directly adhered to the polymer blend layer of the cable shielding or armoring tape.

12. An electrical cable as claimed 11 wherein the peel strength at the interfacial layers of the first random copolymer layer and the outer olefin polymer layer is greater than 0.89 kg/cm (8.73 N/cm) of sample width at a temperature of -12°C after ageing and greater than 1.79 kg/cm (17.55 N/cm) of sample width at a temperature of 60°C after ageing.

13. An electrical cable as claimed in claim 12, wherein the peel strength between the first layer and the outer olefin polymer layer is preferably greater than 2.33 kg/cm (22.85 N/cm) of sample width at a temperature of -12°C after ageing and greater than 2.33 (22.85 N/cm) of sample width at a temperature of 60°C after ageing.

## Patentansprüche

1. An ein Olefinpolymer haftendes Kunststoff/Metall-Laminat mit mindestens einem metallischen Substrat, das einen an mindestens einer Oberfläche davon direkt haftenden Mehrschichten-Kunststoffüberzug besitzt, der eine erste thermoplastische Polymerschicht eines statistischen Copolymers von Ethylen mit einem ethylenisch ungesättigten Carbonsäuremonomer umfaßt, wobei die erste schicht direkt an dem metallischen Substrat haftet, gekennzeichnet durch eine zweite thermoplastische Polymerschicht einer Polymermischung von 60 Gew.-% der Mischung eines Polyethylens niedriger Dichte und 40 Gew.-% der Mischung eines statistischen Copolymers eines größeren Anteils Ethylen mit einem kleineren Anteil einer ethylenisch ungesättigten Säure, die Acrylsäure ist, die direkt an der ersten Polymerschicht an deren, dem metallischen Substrat entgegengesetzten Oberfläche haftet, wobei die Mischungsschicht weiterhin gekennzeichnet ist, daß sie die intermediäre Haftschicht zwischen der ersten Polymerschicht und der Olefinpolymerschicht bildet, die ein Ethylenhomopolymer oder ein Copolymer eines größeren Anteils Ethylen mit einem kleineren Anteil eines damit polymerisierbaren Comonomers ist, wobei die Mischungsschicht eine höhere 90°-Haftfestigkeit (90° peel adhesion) zwischen der ersten Polymerschicht und der Olefinpolymerschicht ergibt, wenn bei -12°C und 71°C (10°F und 160°F) gemessen wird, als durch direkte Haftung der ersten Polymer- und der Olefinpolymerschicht aneinander erhalten wird.

2. An ein Olefinpolymer haftendes Kunstoff/Metall-Laminat mit mindestens einem metallischen Substrat, das einen an mindestens einer Oberfläche davon direkt haftenden mehrschichten-Kunststoffüberzug besitzt, der eine erste thermoplastische Polymerschicht eines statistischen Copolymers von Ethylen mit einem ethylenisch ungesättigten Carbonsäuremonomer umfaßt, wobei die erste Schicht direkt an dem metallischen Substrat haftet, gekennzeichnet durch eine zweite thermoplastische Polymerschicht einer Polymermischung von 70 bis 90 Gew.-% der Mischung eines Copolymers von Ethylen und vinylacetat mit 10 bis 30 Gew.-% der Mischung eines statistischen Copolymers eines größeren Anteils Ethylen mit einem kleineren Anteil einer ethylenisch ungesättigten Säure, die Acrylsäure ist, die direkt an der ersten Polymerschicht an deren, dem metallischen Substrat entgegengesetzten Oberfläche haftet, wobei die Mischungsschicht weiterhin gekennzeichnet ist, daß sie die intermediäre Haftschicht zwischen der ersten Polymerschicht und der Olefinpolymerschicht bildet, die ein Ethylenhomopolymer oder ein Copolymer eines größeren Anteils Ethylen mit einem kleineren Anteil eines damit polymerisierbaren Comonomers ist, wobei die Mischungsschicht eine höhere 90°-Haftfestigkeit (90° peel adhesion) zwischen der ersten Polymerschicht und der Olefinpolymerschicht ergibt, wenn bei -12°C und 71°C (10°F und 160°F) gemessen wird, als durch direkte Haftung der ersten Polymer- und der Olefinpolymerschicht aneinander erhalten wird.

3. Laminat nach Anspruch 1 oder 2, dadurch gekennzeichnet, daß das metallische Substrat Stahl, Aluminium oder Kupfer mit einer Dicke von 0,005 bis 0,64 mm (0,2 bis 25 mil) ist.

4. Laminat nach Anspruch 1 oder 2, dadurch gekennzeichnet, daß das statistische Copolymer in den ersten und zweiten Schichten von 1 bis 30 Gew.-% der darin copolymerisierten, ethylenisch ungesättigten Carbonsäure enthält.

5. Laminat nach einem der vorhergeheden Ansprüche, dadurch gekennzeichnet, daß das Ethylen/Acrylsäure-Copolymer in der Polymermischung der zweiten Schicht einen Acrylsäuregehalt von bis zu 6 Gew.-%, vorzugsweise 3 Gew.-% besitzt.

6. Laminat nach Anspruch 1, dadurch gekennzeichnet, daß das Polyethylen niedriger Dichte in der Polymermischung der zweiten Schicht einen Schmelzindex von mindestens 2,0 besitzt.

7. Laminat nach Anspruch 1 oder 2, dadurch gekennzeichnet, daß eine Seite des metallischen Substrats den zweischichtigen thermoplastischen Polymerüberzug trägt und direkt an der anderen Seite des metallischen Substrats ein einschichtiger Überzug eines statistischen Copolymers von Ethylen mit einem geringeren Anteil einer ethylenisch ungesättigten Carbonsäure haftet.

8. Laminat nach Anspruch 7, dadurch gekennzeichnet, daß die mehrschichtigen und die einschichtigen Überzüge jeweils eine Dicke im Bereich von 0,0025 bis 0,254 mm (0,1 bis 10 mil) aufweisen.

9. Laminat nach Anspruch 7 oder 8, dadurch gekennzeichnet, daß die Haftfestigkeit zwischen den Grenzflächenschichten der ersten statistischen Copolymerschicht und der Olefinpolymerschicht größer als 0,89 kg/cm (8,73 N/cm) Probenbreite bei einer Temperatur von -12°C nach Alterung und größer als 1,79 kg/cm (17,55 N/cm) Probenbreite bei einer Temperatur von 60°C nach Alterung ist.

10. Laminat nach Anspruch 9, dadurch gekennzeichnet, daß die Haftfestigkeit zwischen der ersten Schicht und der Olefinpolymerschicht vorzugsweise größer als 2,33 kg/cm (22,85 N/cm) Probenbreite bei einer Temperatur von -12°C nach Alterung und größer als 2,33 kg/cm (22,85 C/cm) Probenbreite bei einer Temperatur von 60°C nach Alterung ist.

11. Elektrisches Kabel mit verbesserter Hoch- und Trieftemperatur-Strukturintegrität, umfassend (1) einen Kern, der mindestens einen isolierten Leiter enthält, (2) eine Kabelabschirmung oder ein Armierungsband, das den Kern umgibt und ein Laminat nach einem der Ansprüche 1 bis 8 enthält, und (3) eine äußere Olefinumhüllung, die die Kabelabschirmung oder das Armierungsband umgibt und direkt an der Polymermischungsschicht der Kabelabschirmung oder des Armierungsbandes haftet.

12. Elektrisches Kabel nach Anspruch 11, dadurch gekennzeichnet, daß die Haftfestigkeit zwischen den Grenzflächensichichten der ersten statistischen Copolymerschicht und der äußeren Olefinpolymerschicht größer als 0,89 kg/cm (8,73 N/cm) Probenbreite bei einer Temperatur von -12°C nach Alterung und größer als 1,79 kg/cm (17,55 N/cm) Probenbreite bei einer Temperatur von 60°C nach Alterung ist.

13. Elektrisches Kabel nach Anspruch 12, dadurch gekennzeichnet, daß die Haftfestigkeit zwischen der ersten Schicht und der äußeren Olefinpolymerschicht vorzugsweise größer als 2,33 kg/cm (22,85 N/cm) Probenbreite bei einer Temperatur von -12°C nach Alterung und größer als 2,33 kg/cm (22,85 N/cm) Probenbreite bei einer Temperatur von 60°C nach Alterung ist.

## Revendications

1. Stratifié matière plastique/métal qui adhère à un polymère d'oléfine et qui comprend au moins un substrat métallique, sur au moins une surface duquel adhère directement un revêtement plastique multicouche comprenant une première couche de polymère thermoplastique formée d'un copolymère statistique d'éthylène et d'un monomère d'acide carboxylique à insaturation éthylénique, la première couche adhérant directement au substrat métallique, et caractérisé par une seconde couche de polymère thermoplastique formée d'un mélange de polymères dont 60% en poids sont constitués par un polyéthylène basse densité et 40% en poids sont constitués par un copolymère statistique d'une proportion majeure d'éthylène et d'une proportion mineure d'un acide à insaturation éthylénique qui est l'acide acrylique, cette seconde couche adhérant directement à la première couche de polymère sur sa surface opposée au substrat métallique ; la couche formée d'un mélange étant également caractérisée par le fait qu'elle forme une couche adhésive intermédiaire entre la première couche de polymère et la couche de polymère d'oléfine qui est constituée par un homopolymère d'éthylène ou par un copolymère d'une proportion majeure d'éthylène et d'une proportion mineure d'un monomère polymérisable avec l'éthylène, ladite couche formée par un mélange fournissant une résistance à l'arrachement à 90° entre la première couche de polymère et la couche de polymère d'oléfine, mesurée à 12°C et 17°C (10°F et 160°F) supérieure à celle que l'on obtient en faisant directement adhérer l'une à l'autre la première couche de polymère et la couche de polymère d'oléfine.

2. Stratifié matière plastique/métal qui adhère à un polymère d'oléfine et qui comprend au moins un substrat métallique, sur au moins une surface duquel adhère directement un revêtement plastique multicouche comprenant une première couche de polymère thermoplastique d'un copolymère statistique d'éthylène et d'un monomère d'acide carboxylique à insaturation éthylénique, et caractérisé par une seconde couche de polymère thermoplastique formée d'un mélange polymère constitué de 70% à 90% en poids d'un copolymère d'éthylène et d'acétate de vinyle et de 10 à 30% en poids d'un copolymère statistique d'une proportion majeure d'éthylène et d'une proportion mineure d'un acide à insaturation éthylénique qui est l'acide acrylique, cette seconde couche adhérant directement à la première couche de polymère sur sa surface opposée au substrat métallique ; la couche formée d'un mélange fournissant une résistance à l'arrachement à 90° entre la première couche de polymère et la couche de polymère d'oléfine mesurée à 12°C et 71°C (10°F et 160°F) supérieure à celle que l'on obtient en faisant directement adhérer, l'une à l'autre, la première couche de polymère et la couche de polymère d'oléfine.

3. Stratifié selon l'une des revendications 1 ou 2, caractérisé par le fait que le substrat métallique est de l'acier, de l'aluminium ou du cuivre ayant une épaisseur de 0,005 à 0,64 mm (0,2 à 25 mils).

4. Stratifié selon l'une des revendications 1 ou 2, caractérisé par le fait que le copolymère statistique des première et seconde couches contient sous forme copolymérisée 1 à 30% en poids d'acide carboxylique à insaturation éthylénique.

5. Stratifié selon l'une des revendications précédentes caractérisé par le fait que la seconde couche de copolymère éthylène/acide acrylique a une teneur en acide acrylique allant jusqu'à 6% en poids, de préférence 3% en poids.

6. Stratifié selon la revendication 1, caractérisé par le fait que dans le mélange de polymère formant la seconde couche, le polyéthylène basse densité a un indice de fusion d'au moins 2,0.

7. Stratifié selon l'une des revendications 1 ou 2, caractérisé par le fait qu'un côté du substrat métallique porte le revêtement de polymère thermoplastique à deux couches et que sur l'autre côté du substrat adhère directement un revêtement à couche unique d'un copolymère statistique d'éthylène et d'une proportion mineure d'un acide carboxylique à insaturation éthylénique.

8. Stratifié selon la revendication 7 caractérisé par le fait que les revêtements à couches multiples et à couche unique ont chacun une épaisseur comprise entre 0,0025 et 0,254 mm(0,1 à 10 mils).

9. Stratifié selon l'une des revendications 7 ou 8, caractérisé par le fait que la résistance à l'arrachement entre les couches interfaciales de la première couche de polymère statistique et la couche de polymère d'oléfine est supérieure à 0,89 kg/cm (8,73 N/cm) de largeur d'échantillon à une température de -12°C après vieillissement, et supérieure à 1,79 kg/cm (17,55 N/cm) de largeur de l'échantillon à une température de 60°C après vieillissement.

10. Statifié selon la revendication 9, caractérisé par le fait que la résistance à l'arrachement entre la première couche et la couche de polymère d'oléfine est, de préférence, supérieure à 2,33 kg/cm (22,85N/cm) de largeur d'échantillon à une température de -12°C après vieillissement, et supérieure à 2,33 kg/cm (22,85 N/cm) de largeur d'échantillon à une température de 60°C après vieillissement.

11. Câble électrique ayant une intégrité de structure, à haute et à basse température, améliorée, comprenant

(1) une âme comportant au moins un conducteur isolé ; (2) un blindage de câble ou un ruban d'armature entourant l'âme et comprenant un stratifié selon l'une des revendications 1 à 8 et (3) une gaine extérieure d'oléfine entourant le blindage du câble ou le ruban d'armature et adhérant directement à la couche de mélange de polymère du blindage de câble ou du ruban d'armature.

12. Câble électrique selon la revendication 11, caractérisé par le fait que la résistance à l'arrachement aux couches interfaciales de la première couche de copolymère statistique et de la couche extérieure de polymère d'oléfine est supérieure à 0,89 kg/cm (8,73 N/cm) de largeur d'échantillon à une température de -12°C après vieillissement, et supérieure à 1,79 kg/cm (17,55 N/cm) de largeur d'échantillon à une température de 60°C après vieillissement.

13. Câble électrique selon la revendication 12, caractérisé par le fait que la résistance à l'arrachement entre la première couche de polymère et la couche de polymère d'oléfine extérieure est supérieure à 2,33 kg/cm (22,85 N/cm) de largeur d'échantillon à une température de -12°C après vieillissement et à 2,33kg/cm (22,85 N/cm) de largeur d'échantillon à une température de 60°C après veillissement.